# EUROPÄISCHE PATENTSCHRIFT

(11) **EP 2 619 743 B1**
(45) Veröffentlichungstag und Bekanntmachung des Hinweises auf die Patenterteilung: **20.06.2018**
(21) Anmeldenummer: 11748657.1
(22) Anmeldetag: 25.08.2011
(51) Int. Cl.: G08G 1/16, B60W 30/08

(54) **VERFAHREN UND SYSTEM ZUR VERRINGERUNG EINER REAKTIONSTOTZEIT EINER FAHRZEUGSICHERHEITSKONTROLLEINRICHTUNG**
METHOD AND SYSTEM FOR REDUCING A REACTION DELAY TIME OF A VEHICLE SAFETY CONTROL DEVICE
PROCÉDÉ ET SYSTÈME POUR RÉDUIRE LE TEMPS DE RÉACTION D'UN DISPOSITIF DE SURVEILLANCE DU SYSTÈME DE SÉCURITÉ D'UN VÉHICULE

(30) Priorität: 21.09.2010 DE 102010041147
(43) Veröffentlichungstag der Anmeldung: 31.07.2013
(73) Patentinhaber: Continental Teves AG & Co. oHG, 60488 Frankfurt (DE)
(72) Erfinder: STÄHLIN, Ulrich, 65670 Eschborn (DE); MENZEL, Marc, 35096 Weimar/Lahn (DE)
(74) Vertreter: Wagner, Philipp
(86) Internationale Anmeldenummer: PCT/EP2011/064617
(87) Internationale Veröffentlichungsnummer: WO 2012/038185

(56) Entgegenhaltungen:
- EP-A2- 1 557 332
- WO-A2-2009/158223
- US-A1- 2006 195 231
- US-A1- 2009 037 055
- US-A1- 2010 007 728
- US-A1- 2010 063 736

## Beschreibung

Die Erfindung betrifft ein Verfahren zur Verringerung einer Reaktionstotzeit einer Fahrzeugsicherheitskontrolleinrichtung gemäß Oberbegriff von Anspruch 1 und ein System gemäß Oberbegriff von Anspruch 15.

Im Stand der Technik sind unterschiedliche Umfelderfassungssysteme für Kraftfahrzeuge bekannt, die den Fahrer beim Führen des Fahrzeugs unterstützen. Die DE 10 2004 057 060 A1 offenbart in diesem Zusammenhang eine Fahrerassistenzvorrichtung zur Erkennung von Hindernissen auf der eigenen Fahrspur mittels Umfeldsensoren wie Radar, Lidar oder Kamera. Durch Vergleich der Relativgeschwindigkeit zum Hindernis mit der eigenen Fahrzeuggeschwindigkeit kann festgestellt werden, ob es sich um ein stationäres Hindernis oder ein dem eigenen Fahrzeug entgegenkommendes Fahrzeug handelt. Gegebenenfalls führt die offenbarte Vorrichtung einen Eingriff in die Lenkung, die Bremse, den Motor oder das Getriebe durch.

Die DE 2007 042 792 A1 beschreibt ein Verfahren zur Umfeld-überwachung eines Fahrzeugs, welches neben Umfeldsensoren auch Fahrzeug-zu-Fahrzeug-Kommunikationsmittel nutzt. Um schneller auf eine Gefährdungssituation reagieren zu können, werden über die Fahrzeug-zu-Fahrzeug-Kommunikationsmittel auch Daten von Fahrzeugen erfasst, welche für die Umfeldsonsoren nicht erkennbar sind. Beispielsweise kann so ein beginnender Bremsvorgang des vor-vorausfahrenden Fahrzeugs erfasst werden, obwohl dieses Fahrzeug durch das vorausfahrende Fahrzeug verdeckt ist und somit von den Umfeldsensoren nicht erkannt werden kann. Damit kann das eigene Fahrzeug bereits dann verzögert werden, bevor die Umfeldsensoren einen Bremsvorgang am vorausfahrenden Fahrzeug detektieren.

Dadurch kann z.B. im Kolonnenverkehr die Gefahr eines Auffahrunfalls bei plötzlichem Abbremsen des vorausfahrenden Fahrzeugs verringert werden.

In der DE 10 2007 039 110 A1 wird weiterhin ein Fahrerassistenzsystem definiert, das die Aufmerksamkeit des Fahrers eines Fahrzeugs mittels eines Vorwarnreizes für ein möglicherweise folgendes Warnsignal erhöht. Wenn ein Umfeldsensor eine kritische Situation erkennt, wird ein nur unwesentlich über der Wahrnehmungsschwelle des Fahrers liegender Vorwarnreiz ausgegeben, noch bevor die Umfeldsituation sicher erkannt werden konnte. Der Vorwarnreiz ist dabei so ausgelegt, dass der Fahrer allein aufgrund dieses Reizes keine Lenk-oder Bremsaktion unternimmt. Sobald die Umfeldsituation sicher erkannt wurde, wird ggf. ein Warnsignal an den Fahrer ausgegeben. Da durch den Vorwarnreiz die Aufmerksamkeit des Fahrers bereits gesteigert wurde, kann er schneller auf das Warnsignal reagieren.

In der EP 1 557 332 A2 wird eine Fahrzeugregeleinrichtung offenbart, die mittels Umfeldsensorik wie einer Kamera ein dem eigenen Fahrzeug vorausfahrendes Fahrzeug erfasst und dessen Verhalten beobachtet. Der Nachteil dieser aus dem Stand der Technik bekannten Vorrichtungen und Verfahren besteht darin, dass sie aufgrund der hohen bestehenden Sicherheitsrisiken erst dann einen Eingriff in ein Fahrzeugsteuerungssystem durchführen oder eine Warnung an den Fahrer ausgeben, wenn eine Umfeldsituation sicher validiert werden konnte. Dadurch geht unter Umständen eine zur Unfallvermeidung oder zumindest zur Unfallminderung benötigte wichtige Zeitspanne verloren. Selbst wenn bei einem Verdacht auf eine Gefahrensituation sofort ein Vorwarnreiz an den Fahrer ausgegeben wird, vergeht eine eventuell entscheidende Zeitspanne bis zur Ausgabe einer Vollwarnung ungenutzt. Durch den Vorwarnreiz verringert sich lediglich die Zeitspanne, die der Fahrer zum Reagieren auf die Vollwarnung benötigt. Gerade bei den immer weiter an Verbreitung gewinnenden Systemen, die einen vollautonomen Steuereingriff durchführen, spielt die Reaktionszeit des Fahrers aber ohnehin keine Rolle mehr.

Die Aufgabe der vorliegenden Erfindung ist es daher, zur Vermeidung einer Reaktionstotzeit, bei Erkennen einer eine Kollisionsgefahr aufweisenden Umfeldsituation ohne Umfeldsituationsvalidierung sofort einen Eingriff in die Fahrzeugsteuerung durchzuführen, ohne dadurch eine Gefährdung für den Umgebungsverkehr zu schaffen.

Diese Aufgabe wird erfindungsgemäß durch das Verfahren zur Verringerung einer Reaktionstotzeit einer Fahrzeugsicherheitskontrolleinrichtung gemäß Anspruch 1 und das System gemäß Anspruch 15 gelöst.

Das erfindungsgemäße Verfahren zur Verringerung einer Reaktionstotzeit einer Fahrzeugsicherheitskontrolleinrichtung, welche aufgrund einer eine Kollisionsgefahr aufweisenden Umfeldsituation Eingriffe in die Fahrzeugsteuerung durchführt,
zeichnet sich dadurch aus, dass die Fahrzeugsicherheitskontrolleinrichtung einen ersten Eingriff in die Fahrzeugsteuerung durchführt, bevor die die Kollisionsgefahr aufweisende Umfeldsituation validiert ist. Dadurch kann sehr schnell auf eine drohende Kollisionsgefahr reagiert werden und es entsteht keine Reaktionstotzeit wie bei gattungsgemäßen Verfahren. Dieser Zeitgewinn trägt unter Umständen entscheidend zur Vermeidung einer Kollision oder zumindest zur Abschwächung einer unvermeidbaren Kollision bei. Damit lässt sich die Häufigkeit von Unfällen im Straßenverkehr verringern und die Schwere unvermeidbarer Unfälle reduzieren. In jedem Fall bietet das Verfahren einen wesentlichen Gewinn an Sicherheit im Straßenverkehr.

Unter Kollisionsgefahr wird im Sinne dieser Schrift nicht nur die Gefahr einer Kollision zwischen zwei Fahrzeugen verstanden, sondern vielmehr jede mögliche Art von Kollision, an der ein Fahrzeug beteiligt ist. So bezieht sich der Begriff beispielsweise auch auf die Kollision eines Fahrzeugs mit einem Fußgänger, einem Tier, einem motorisierten oder nicht motorisierten Zweirad sowie stationären oder nichtstationären Hindernissen jeglicher Beschaffenheit.

Bevorzugt ist es vorgesehen, dass die Fahrzeugsteuerung die Bremseinrichtung und/oder Lenkeinrichtung eines Fahrzeugs umfasst. Sowohl die Brems- als auch die Lenkeinrichtung bieten gute Voraussetzungen, mittels eines Fahrzeugeingriffs eine bevorstehende Kollision zu vermeiden oder zumindest abzuschwächen. Insbesondere bietet die Bremseinrichtung den Vorteil, das Fahrzeug vor einem Hindernis anzuhalten und zum Stehen zu bringen. Die Lenkeinrichtung bietet hingegen den Vorteil, dass ein Hindernis umfahren werden kann. Auch ein gleichzeitiger Einsatz von Brems- und Lenkmitteln zur Kollisionsvermeidung ist möglich.

In einer weiteren bevorzugten Ausführungsform ist es vorgesehen, dass der erste Eingriff in die Fahrzeugsteuerung beendet wird, wenn die die Kollisionsgefahr aufweisende Umfeldsituation nicht validiert werden kann. Dadurch kann der Fahrer wieder die alleinige Kontrolle über das Fahrzeug übernehmen, falls sich der erste Eingriff im Zuge der Validierung als nicht notwendig herausstellt. Da die Dauer der Validierung typischerweise in einem Zeitbereich von wenigen 100 ms liegt, kann der erste Eingriff schnell beendet werden und bedeutet nur eine vergleichsweise geringe Einbuße an Fahrkomfort. Wegen des raschen Beendens eines unnötigen ersten Eingriffs ergibt sich außerdem keine Gefahr für den Umgebungsverkehr.

Zweckmäßigerweise ist es vorgesehen, dass der erste Eingriff in die Fahrzeugsteuerung nur durchgeführt wird, wenn die Zeit bis zur Validierung der Umfeldsituation und/oder bis zum Durchführen eines zweiten Eingriffs nicht ausreichend ist, um einen bevorstehenden Unfall zu vermeiden. Wenn die unvalidierte Umfeldsituation eine Kollisionsgefahr aufweist und die errechnete Zeitspanne bis zum Eintreten der Kollision ausreichend lang für eine Umfeldsituationsvalidierung und einen anschließenden, unfallvermeidenden Eingriff in die Fahrzeugsteuerung ist, wird kein erster Eingriff durchgeführt. Dadurch ergibt sich der Vorteil, dass bei ausreichend zur Verfügung stehender Reaktionszeit kein unvalidierter und sich ggf. als unnötig herausstellender Eingriff durchgeführt wird, der zu einer geringen Einbußen an Fahrkomfort führt.

Außerdem ist es vorteilhaft, dass der erste Eingriff in die Fahrzeugsteuerung ein geringfügiger Bremseneingriff und/oder ein geringfügiger Lenkeingriff ist, welche/r alleine nicht ausreichend ist/sind, einen bevorstehenden Unfall zu verhindern. Dadurch kann bereits die Zeit bis zur Validierung der Umfeldsituation vorteilhaft zur Einleitung der Unfallvermeidung oder zumindest zur Unfallverminderung genutzt werden, ohne durch einen zu starken Eingriff eine ggf. unnötige Gefährdung für den Umgebungsverkehr zu schaffen.

Insbesondere ist es vorteilhaft, dass der geringfügige Bremseneingriff eine Verzögerung in einem Bereich von etwa 0,3 g bis etwa 0,5 g bewirkt. Dieser Verzögerungsbereich ist einerseits ausreichend, um bereits im Vorfeld einer Vollbremsung durch Abbau eines wesentlichen Teils der kinetischen Fahrzeugenergie zur Unfallvermeidung beizutragen. Andererseits ist dieser Verzögerungsbereich noch nicht so stark, dass durch das plötzliche Abbremsen eine Gefährdung für nachfolgende Fahrzeuge geschaffen wird.

Gemäß einer weiteren bevorzugten Ausführungsform der Erfindung ist es vorgesehen, dass die Fahrzeugsicherheitskontrolleinrichtung zusätzlich zum ersten Eingriff in die Fahrzeugsteuerung eine Warnung an den Fahrer ausgibt. Diese Warnung kann optischer, akustischer oder haptischer Art sein. Dadurch ergibt sich der Vorteil, dass der Fahrer bereits bei Vorliegen des Verdachts auf eine Kollisionsgefahr gewarnt wird, bevor diese validiert wird. Durch diese frühzeitige Erhöhung der Fahreraufmerksamkeit wird auch dem Fahrer selbst mehr Zeit zur Reaktion auf eine Gefahrensituation verschafft.

Insbesondere ist es bevorzugt, dass die Warnung mit einer zeitlichen Verzögerung an den Fahrer ausgegeben wird. Die zeitliche Verzögerung bietet der Fahrzeugsicherheitskontrolleinrichtung Gelegenheit, das unvalidierte Signal vor der Ausgabe einer Warnung an den Fahrer weiteren Verarbeitungsschritten zu unterziehen.

Ganz besonders bevorzugt ist es, dass die zeitliche Verzögerung der Zeitspanne vom Durchführen des ersten Eingriffs bis zum Durchführen des zweiten Eingriffs entspricht. Dadurch kann die Umfeldsituation validiert werden, bevor die Warnung an den Fahrer ausgegeben wird. Somit erhält der Fahrer eine zuverlässige Warnung, die zuvor validiert wurde. Eine unnötige Verunsicherung des Fahrers kann dadurch vermieden werden.

Außerdem ist es vorteilhaft, dass der zweite Eingriff in die Fahrzeugsteuerung durchgeführt wird, wenn die die Kollisionsgefahr aufweisende Umfeldsituation validiert wurde. Sobald das Vorliegen einer Kollisionsgefahr zuverlässig erkannt und bestätigt wurde, kann somit ein zur Unfallverhinderung ausreichend starker Eingriff in die Fahrzeugsteuerung durchgeführt werden. Falls die Kollision unvermeidbar ist, kann durch eine Vollbremsung zumindest ein maximal möglicher Betrag an kinetischer Energie aus dem Fahrzeug herausgenommen werden, um die bevorstehende Kollision abzumildern. Weiterhin ergibt sich der Vorteil, dass der zweite Eingriff in die Fahrzeugsteuerung nicht aufgrund einer unvalidierten und daher ggf. nicht richtig erkannten Situation durchgeführt wird. Dies ist insofern bedeutsam, da der zweite Eingriff erheblichen Einfluss auf die Fahrzeugsteuerung hat und somit eine Gefährdung für den Umgebungsverkehr schaffen kann.

Weiterhin ist es bevorzugt, dass der zweite Eingriff in die Fahrzeugsteuerung angepasst an die die Kollisionsgefahr aufweisende, validierte Umfeldsituation durchgeführt wird. Dadurch ergibt sich der Vorteil, dass die Intensität des Eingriffs abgestuft an die jeweiligen Erfordernisse durchgeführt wird. Da ein starker Eingriff eine Gefährdung für den Umgebungsverkehr schaffen kann, kann diese Gefährdung dadurch vorteilhaft auf ein zur Unfallvermeidung unbedingt notwendiges Minimum begrenzt werden.

In einer weiteren bevorzugten Ausführungsform der Erfindung ist es vorgesehen, dass der Lenkeingriff ein Momentenaufschlag auf das Lenkmoment und/oder ein Winkelaufschlag auf den Lenkwinkel ist. Somit behält der Fahrer stets die Kontrolle über die Fahrzeugsteuerung und damit die volle Verantwortung. Ein Momentenaufschlag wirkt in Form eines zusätzlichen Drehmoments am Lenkrad des Fahrzeugs, was vom Fahrer als Empfehlung zur Anpassung des Lenkwinkels wahrgenommen wird. Falls der Fahrer der Empfehlung nicht nachkommen will, kann er das zusätzliche Drehmoment ohne besonderen Kraftaufwand ignorieren. Eine weitere Möglichkeit für einen Momentenaufschlag stellt eine Änderung der Lenkunterstützung bei einer elektrischen Servolenkung dar. Ein Winkelaufschlag unterstützt einen Lenkvorgang des Fahrers, indem einer geringen Lenkbewegung am Lenkrad eine vergrößerte Lenkbewegung der gelenkten Fahrzeugräder entspricht. Dadurch kann die Einstellung eines benötigten Lenkwinkels durch den Fahrer beschleunigt werden. Ebenso ist es aber auch hier möglich, dass der Fahrer durch Begrenzen der Lenkbewegung oder leichtes Gegenlenken der Empfehlung der Fahrzeugsicherheitskontrolleinrichtung nicht nachkommt.

Vorzugsweise zeichnet sich das erfindungsgemäße Verfahren dadurch aus, dass dem Fahrer angezeigt wird, ob ein erster Eingriff durchgeführt wurde. Dadurch erhält der Fahrer eine Information über die Ursache des von ihm wahrgenommenen Eingriffs in die Brems- und/oder Lenkeinrichtung. Somit ergibt sich der Vorteil, dass der Fahrer keinen technischen Defekt seines Fahrzeugs als Ursache vermutet und nicht verunsichert wird.

Besonders bevorzugt zeichnet sich das erfindungsgemäße Verfahren dadurch aus, dass dem Fahrer der Grund angezeigt wird, weswegen der erste Eingriff durchgeführt wurde. Damit erhält der Fahrer nicht nur die Information über die Durchführung des von ihm wahrgenommenen Eingriffs, sondern zusätzlich den Grund, der zu dem Eingriff führte. Dies kann beispielsweise die irrtümliche Erkennung eines Stauendes sein, das sich im Zuge der Umfeldvalidierung nur als zähflüssige Verkehrsverdichtung herausstellt. Dadurch wird die eventuell entstandene Verunsicherung des Fahrers aufgrund des ersten Eingriffs weiter abgebaut.

Weiterhin ist es vorteilhaft, dass die Umfeldsituation mittels Fahrzeug-zu-X-Kommunikationsmitteln und/oder Umfelderfassungsmitteln erfasst wird. Sowohl Fahrzeug-zu-X-Kommunikationsmittel als auch Umfelderfassungsmittel sind zur Erfassung der Fahrzeugumgebung geeignet und in vielen Fahrzeugen standardmäßig vorhanden. Der besondere Vorteil der Umfelderfassungsmittel besteht darin, dass sie die Fahrzeugumgebung selbstständig erfassen können, ohne dabei auf Sender angewiesen zu sein, welche die Daten zur Verfügung stellen. Dies erlaubt eine im Wesentlichen lückenlose und autarke Wahrnehmung des näheren Fahrzeugumfelds. Demgegenüber bieten die Fahrzeug-zu-X-Kommunikationsmittel den besonderen Vorteil, dass sie Objekte erfassen können, die außerhalb der Wahrnehmungsreichweite der Umfelderfassungsmittel oder auch des Fahrers liegen.

Besonders vorteilhaft ist es, dass die Umfelderfassungsmittel die Umfeldsituation auf Basis von Radar und/oder Kamera und/oder Lidar und/oder Laser erfassen. Derartige Sensoren werden bereits in einer großen Anzahl von Fahrzeugen verwendet und eignen sich nicht nur zur prinzipiellen Erfassung und Erkennung eines Objekts, sondern ermöglichen auch eine zuverlässige Abstandsbestimmung. Erst dadurch kann die Umfeldsituation hinsichtlich eines erkannten Objekts zuverlässig auf das Vorliegen einer Gefährdung analysiert werden.

Außerdem ist es besonders vorteilhaft, dass die Fahrzeug-zu-X-Kommunikationsmittel auf Basis mindestens einer der folgenden Verbindungsarten kommunizieren:
- WLAN-Verbindung (nach IEEE 802.11a/b/g/n/p),
- ISM-Verbindung (Industrial, Scientific, Medical Band, insbesondere im Sub-GHz Bereich),
- Infrarotverbindung und
- Mobilfunkverbindung.

Diese Verbindungsarten bieten dabei unterschiedliche Vor-und Nachteile, je nach Art und Wellenlänge. WLAN-Verbindungen ermöglichen z.B. eine hohe Datenübertragungsrate. Eine Datenübertragung um ein Hindernis herum ist jedoch nur begrenzt möglich. ISM-Verbindungen hingegen bieten zwar eine geringere Datenübertragungsrate, erlauben es aber, auch Daten um ein Sichthindernis herum auszutauschen. Infrarotverbindungen wiederum bieten eine geringe Datenübertragungsrate, die bei fehlender Sichtverbindung zudem stark eingeschränkt wird. Mobilfunkverbindungen schließlich werden durch Sichthindernisse nicht beeinträchtigt und bieten eine gute Datenübertragungsrate. Dafür ist der Verbindungsaufbau vergleichsweise langsam. Durch die Kombination und gleichzeitige bzw. parallele Nutzung mehrerer dieser Verbindungsarten ergeben sich weitere Vorteile, da so die Nachteile einzelner Verbindungsarten ausgeglichen werden können.

In einer weiteren bevorzugten Ausführungsform der Erfindung ist es vorgesehen, dass die Validierung der die Kollisionsgefahr aufweisenden Umfeldsituation über ein weiteres Umfelderfassungsmittel oder ein weiteres Fahrzeug-zu-X-Kommunikationsmittel durchgeführt wird. Durch die Erkennung des Vorliegens einer Gefahrensituation mittels eines zusätzlichen Umfeldsensors oder mittels eines zusätzlichen Fahrzeug-zu-X-Kommunikationsmittels kann mit hoher Wahrscheinlichkeit davon ausgegangen werden, dass eine tatsächliche Gefährdung besteht. Die Gefahrensituation kann somit als validiert eingestuft werden.

Vorzugsweise zeichnet sich das Verfahren dadurch aus, dass die Validierung der die Kollisionsgefahr aufweisenden Umfeldsituation über das die Kollisionsgefahr aufweisende Umfeldsituation zuerst erfassende Umfelderfassungsmittel durchgeführt wird, indem das Umfelderfassungsmittel die die Kollisionsgefahr aufweisende Umfeldsituation über einen zur Validierung ausreichend langen Zeitraum erfasst. Wenn beispielsweise eine im Fahrzeug vorhandene Kamera eine Objekt erfasst, das als Gefahr eingestuft wird, so kann eine Validierung ohne zusätzliche Sensoren oder Fahrzeug-zu-X-Kommunikationsmittel stattfinden, indem die Kamera das Objekt über mehrere Arbeitszyklen hinweg erkennt und das Objekt bei jedem Arbeitszyklus als Gefahr eingestuft wird. Analog kann eine Gefahrensituation mittels eines anderen im Fahrzeug vorhandenen Sensors ohne das Hinzuziehen weiterer Umfelderfassungsmittel oder Fahrzeug-zu-X-Kommunikationsmittel validiert werden.

Die vorliegende Erfindung betrifft weiter ein System zur Verringerung einer Reaktionstotzeit einer Fahrzeugsicherheitskontrolleinrichtung, in welchem das erfindungsgemäße Verfahren durchgeführt wird. Das System umfasst
- Bremseneingriffsmittel,
- Lenkeingriffsmittel,
- Umfelderfassungsmittel,
- Fahrzeug-zu-X-Kommunikationsmittel und
- eine Fahrzeugsicherheitskontrolleinrichtung
und zeichnet sich dadurch aus, dass die Fahrzeugsicherheitskontrolleinrichtung einen ersten Eingriff in die Fahrzeugsteuerung durchführt, bevor eine eine Kollisionsgefahr aufweisende Umfeldsituation validiert ist.

Weitere bevorzugte Ausführungsformen ergeben sich aus den Unteransprüchen und der nachfolgenden Beschreibung eines Ausführungsbeispiels an Hand von Figuren.

Es zeigt
- Fig. 1: ein Flussdiagramm, welches die einzelnen Ablaufschritte des Verfahrens darstellt,
- Fig. 2: eine Verkehrssituation auf einer vielbefahrenen Straße, in der das erfindungsgemäße Verfahren zum Einsatz kommt und
- Fig. 3: schematisch den Aufbau eines erfindungsgemäßen Systems.

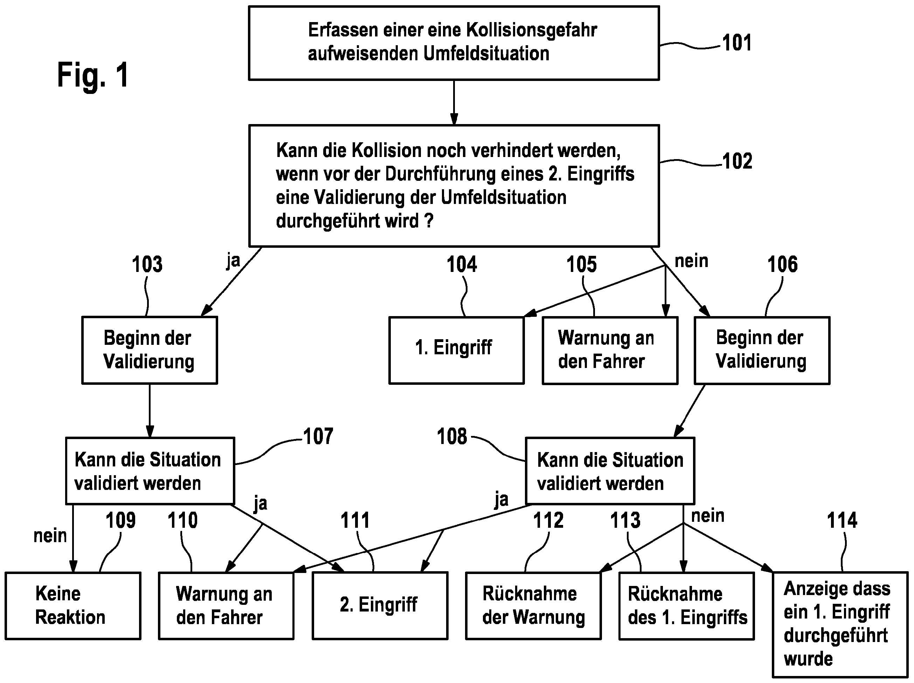

In Fig. 1 sind die einzelnen Ablaufschritte eines beispielgemäßen Verfahrens als Flussdiagramm dargestellt. In Schritt 101 wird zunächst eine Umfeldsituation erkannt, welche eine Kollisionsgefahr aufweist. Da die Situation nicht von mehreren der zur Verfügung stehenden Umfeldsensoren und Fahrzeug-zu-X-Kommunikationsmittel gleichzeitig erfasst wird, sondern zunächst nur von einem einzelnen Sensor, wird sie von der Fahrzeugsicherheitskontrolleinrichtung als nicht validiert eingestuft. In Schritt 102 analysiert die Fahrzeugsicherheitskontrolleinrichtung die noch nicht validierte Umfeldsituation auf die bis zur ggf. bevorstehenden Kollision noch zur Verfügung stehende Reaktionszeit. Falls die Analyse ergibt, dass die zur Verfügung stehende Reaktionszeit ausreichend ist, um die ggf. bevorstehende Kollision auch dann noch zu vermeiden, wenn zunächst eine Validierung der Umfeldsituation und daraufhin ggf. ein zweiter Eingriff durchgeführt wird, so beginnt das erfindungsgemäße System in Verfahrensschritt 103 mit der Validierung der Umfeldsituation. Erkennt die Fahrzeugsicherheitskontrolleinrichtung jedoch, dass die nach einer Validierung noch zur Verfügung stehende Reaktionszeit nicht ausreichend sein wird, um die ggf. bevorstehende Kollision zu vermeiden, so führt das System in Schritt 104 einen ersten Eingriff in die Fahrzeugsteuerung durch. Dieser erste Eingriff ist nur ein geringfügiger Eingriff in die Brems- und Lenkmittel des Fahrzeugs, welcher alleine nicht ausreichend ist, um die ggf. bevorstehende Kollision zu verhindern. Gleichzeitig wird in Schritt 105 eine Warnung an den Fahrer ausgegeben, um dessen Aufmerksamkeit zu steigern, und in Schritt 106 wird mit dem Beginn der auch in diesem Fall notwendigen Umfeldvalidierung begonnen. Unabhängig davon, ob ein erster Eingriff durchgeführt wird und eine Warnung ausgegeben wird, ergibt sich in den Schritten 107 bzw. 108, ob die die Kollisionsgefahr aufweisende Umfeldsituation validiert werden kann. Falls die Situation nicht validiert werden kann, führt das Verfahren in Schritt 109 keinen zweiten Fahrzeugeingriff durch. Da in diesem Fall weder ein erster Eingriff durchgeführt wurde, noch eine Warnung ausgegeben wurde und der Fahrer somit nichts von den im System durchlaufenen Verfahrensschritten mitbekommen hat, kann das Verfahren in Schritt 109 beendet werden. Falls die Umfeldvalidierung jedoch in Schritt 108 das Vorliegen einer Kollisionsgefahr nicht bestätigen kann, so wird in Schritt 112 die Warnung an den Fahrer zurückgenommen und der erste Eingriff in Schritt 113 beendet. Zusätzlich wird dem Fahrer in Schritt 114 angezeigt, dass ein erster Eingriff durchgeführt wurde und ebenso die Ursache, warum ein erster Eingriff durchgeführt wurde. Dies trägt zur Beruhigung des Fahrers bei, der durch den ersten Eingriff in die Fahrzeugsteuerung und die ausgegebene Warnung verunsichert wurde, da er selbst keine Gefahr wahrgenommen hat. Sofern die Umfeldvalidation in den Verfahrensschritten 107 oder 108 jedoch die in Schritt 101 erfasste Gefahr bestätigt, wird in Schritt 111 ein zweiter Eingriff in die Fahrtzeugsteuerung vorgenommen und in Schritt 110 eine Warnung an den Fahrer ausgegeben bzw. aufrechterhalten. Der zweite Eingriff kann in seiner Intensität deutlich stärker sein als der erste Eingriff. Die Intensität des zweiten Eingriffs richtet sich dabei nach den Erfordernissen zur Unfallvermeidung.

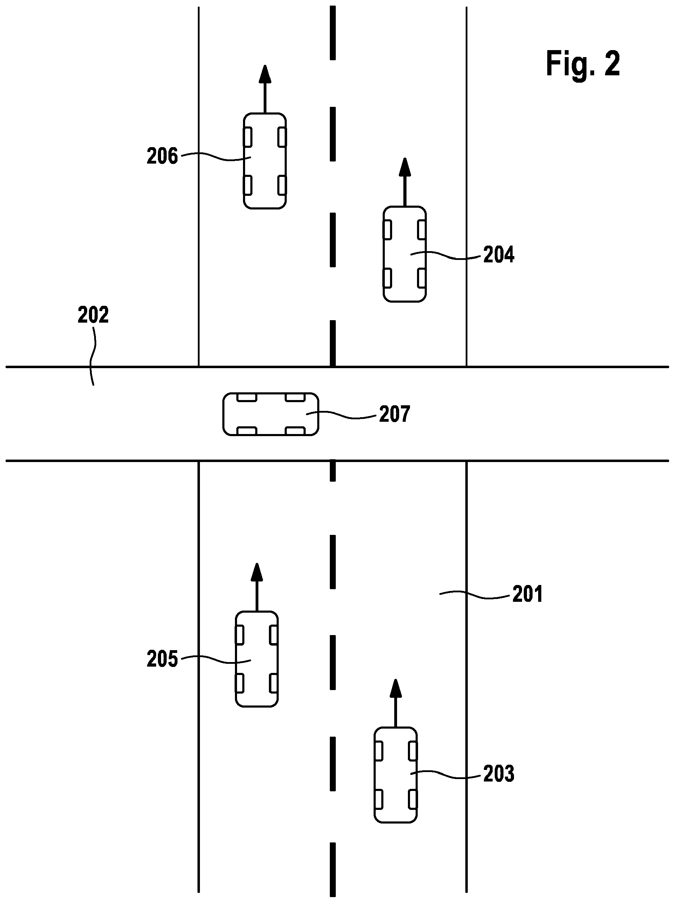

Fig. 2 zeigt eine Verkehrssituation auf einer vielbefahrenen Straße 201, in der das erfindungsgemäße Verfahren zum Einsatz kommt. Straße 201 ist zweispurig, wobei beide Spuren die selbe Fahrtrichtung aufweisen. Eine Brücke 202 führt über Straße 201. Die Fahrtrichtung der auf Straße 201 fahrenden Fahrzeuge 203, 204, 205 und 206 ist außerdem jeweils durch einen in Fahrtrichtung weisenden Pfeil dargestellt. Auf Brücke 202 befindet sich außerdem Fahrzeug 207, das aufgrund eines technischen Defekts nicht weiterfahren kann.

Fahrzeug 203 verfügt über das erfindungsgemäße System zur Verringerung einer Reaktionstotzeit. Es ist außerdem mit einer radarbasierten intelligenten Geschwindigkeitsregelung (ACC) und Fahrzeug-zu-X-Kommunikationsmitteln ausgestattet. Das vorausfahrende Fahrzeug 204 ist in diesem Ausführungsbeispiel ebenfalls mit Fahrzeug-zu-X-Kommunikationsmitteln ausgestattet. Da das Fahrzeug 204 einen unerwarteten und starken Bremsvorgang beginnt, empfängt Fahrzeug 203 über die Fahrzeug-zu-X-Kommunikationsmittel eine Information über den einsetzenden Verzögerungsvorgang. Durch diesen plötzlichen und starken Verzögerungsvorgang entsteht eine Kollisionsgefahr für Fahrzeug 203. Da die in Fahrzeug 203 vorhandene Fahrzeugsicherheitskontrolleinrichtung erkennt, dass die zur Unfallvermeidung zur Verfügung stehende Zeitspanne nicht ausreicht, um vor dem Einleiten des zweiten Eingriffs noch eine Validierung der vorliegenden Gefahrensituation durchzuführen, wird sofort ein erster Eingriff gestartet. Der erste Eingriff führt einen Bremsvorgang mit einer Verzögerung von 0,3 g durch. Gleichzeitig wird eine Warnung an den Fahrer ausgegeben und der Validierungsprozess zur Validierung der Umfeldsituation gestartet. Durch den ersten Eingriff wird Fahrzeug 203 daher bereits während der Validierung geringfügig verzögert, um so eine eventuell bevorstehende Kollision mit Fahrzeug 204 zu vermeiden oder zumindest abzuschwächen. Die Validierung der Umfeldsituation, welche die Kollisionsgefahr aufweist, wird beispielsgemäß durch den ebenfalls in Fahrzeug 203 vorhandenen Radarsensor durchgeführt. Da der Radarsensor nur einen aktuellen Ist-Abstand erfassen kann, wird eine gewisse Zeitspanne benötigt, um eine Abstandsver-änderung sicher zu erkennen und die Umfeldsituation zu validieren oder zu verwerfen. Nach 400 ms kann die über die Fahrzeug-zu-X-Kommunikationsmittel empfangene Botschaft durch den Radarsensor bestätigt werden und die Fahrzeugsicherheitskontrolleinrichtung führt einen zweiten Eingriff in die Fahrzeugsteuerung durch. Dieser zweite Eingriff ist deutlich stärker als der erste Eingriff und wird an die jeweiligen Unfelderfordernisse angepasst. In diesem Fall wird die Verzögerung von Fahrzeug 203 daher an die Verzögerung von Fahrzeug 204 angepasst und zusätzlich der zur Verfügung stehende Sicherheitsabstand zwischen den beiden Fahrzeugen berücksichtigt.

Gemäß einem weiteren Ausführungsbeispiel in Fig. 2 verfügt Fahrzeug 205 ebenfalls über ein erfindungsgemäßes System. In diesem Fall umfasst das System neben Fahrzeug-zu-X-Kommunikationsmitteln einen Lasersensor zur Abstandsmessung zum vorausfahrenden Fahrzeug 206. Fahrzeug 205 wird außerdem unter der Brücke 202 hindurchfahren, auf der sich Fahrzeug 207 über der Fahrspur von Fahrzeug 205 befindet. Der technische Defekt an Fahrzeug 207 führt außerdem dazu, dass über die Fahrzeug-zu-X-Kommunikationsmittel eine unbegründete Notbremswarnung mit der Positionsangabe von Fahrzeug 207 gesendet wird. Die Positionsangabe wird in diesem Beispiel in Form von GPS-Koordinaten übermittelt. Fahrzeug 205 empfängt die Notbremswarnung von Fahrzeug 207 über die eigenen Fahrzeug-zu-X-Kommunikationsmittel und erkannt anhand der in der Nachricht enthaltenen GPS-Koordinaten, dass sich Fahrzeug 207 direkt vor Fahrzeug 205 befindet. Die Fahrzeugsicherheitskontrolleinrichtung von Fahrzeug 205 erfasst somit eine Umfeldsituation, die eine Kollisionsgefahr aufweist, wird zunächst analysiert, ob die ggf. bevorstehende Kollision vermieden werden kann, wenn ein ggf. notwendiger Bremsvorgang erst nach der Situationsvalidierung einsetzt. Da die Analyse ergibt, dass die zur Verfügung stehende Restreaktionszeit zur Kollisionsvermeidung nicht ausreichend ist, wird ein erster Eingriff in die Fahrzeugbremsmittel durchgeführt. Fahrzeug 205 verzögert infolge des ersten Eingriffs mit einer Verzögerung von 0,5 g. Während der erste Eingriff stattfindet und Fahrzeug 205 leicht verzögert, wird eine Validierung der Umfeldsituation über den Lasersensor durchgeführt. Der Lasersensor benötigt 300 ms, um zu überprüfen, ob sich ein Fahrzeug mit den GPS-Koordinaten von Fahrzeug 207 auf der Fahrbahn befindet. Weil der Lasersensor kein entsprechendes Objekt erkennen kann, stuft die Fahrzeugsicherheitskontrolleinrichtung die Kollisionsgefahr als nicht validiert ein. Der erste Eingriff wird daher zurückgenommen und ein zweiter Eingriff wird nicht vorgenommen. Da in diesem Ausführungsbeispiel keine Warnung an den Fahrer ausgegeben wurde, muss auch keine Warnung zurückgenommen werden. Um den Fahrer, der den ersten Eingriff in Form eines plötzlich einsetzenden, leichten Stoßes wahrgenommen hat, nicht zu verunsichern, wird ihm auf einer Anzeige im Fahrzeug dargestellt, dass der erste Eingriff stattgefunden hat und warum der erste Eingriff stattgefunden hat. Dadurch, dass nur ein geringfügiger Bremsvorgang von 300 ms Dauer durchgeführt wurde, wird für evtl. nachfolgende Fahrzeuge zudem keine Gefahrensituation geschaffen.

Ein weiteres Ausführungsbeispiel ist ebenfalls in Fig. 2 dargestellt. Fahrzeug 205 fährt hinter Fahrzeug 206. Beide Fahrzeuge besitzen Fahrzeug-zu-X-Kommunikationsmittel, Fahrzeug 205 verfügt zudem über einen Lasersensor zur Abstandsmessung zum vorausfahrenden Fahrzeug 206. Der Fahrer von Fahrzeug 206 bremst plötzlich unerwartet, da er ein in Fig. 2 nicht dargestelltes Hindernis vor sich auf der Fahrbahn wahrnimmt. Noch bevor die gewünschte Verzögerung eintritt, sendet Fahrzeug 206 eine Notbremswarnung über die im Fahrzeug vorhandenen Fahrzeug-zu-X-Kommunikationsmittel. Diese Notbremswarnung wird von Fahrzeug 205 empfangen, woraufhin die Fahrzeugsicherheitskontrolleinrichtung eine unvalidierte Kollisionsgefahr feststellt. Da die errechnete verbleibende Reaktionszeit genug Spielraum für eine Validierung ohne sofortigen ersten Eingriff erlaubt, wird zunächst nur eine Situationsvalidierung mittels des Lasersensors durchgeführt.

Es findet kein erster Eingriff statt und es wird keine Warnung an den Fahrer ausgegeben, um den Fahrer nicht unnötig zu beunruhigen. Der Lasersensor erkennt innerhalb von 300 ms, dass Fahrzeug 206 stark verzögert. Somit stuft die Fahrzeugsicherheitskontrolleinrichtung die Kollisionsgefahr als validiert ein und führt einen zweiten Eingriff in die Fahrzeugbremsmittel durch, ohne zuvor den ersten Eingriff vorgenommen zu haben. Gleichzeitig wird eine Warnung an den Fahrer ausgegeben. Durch den zweiten Eingriff kommt Fahrzeug 205 mit ausreichend Sicherheitsabstand zu Fahrzeug 206 zum Stehen.

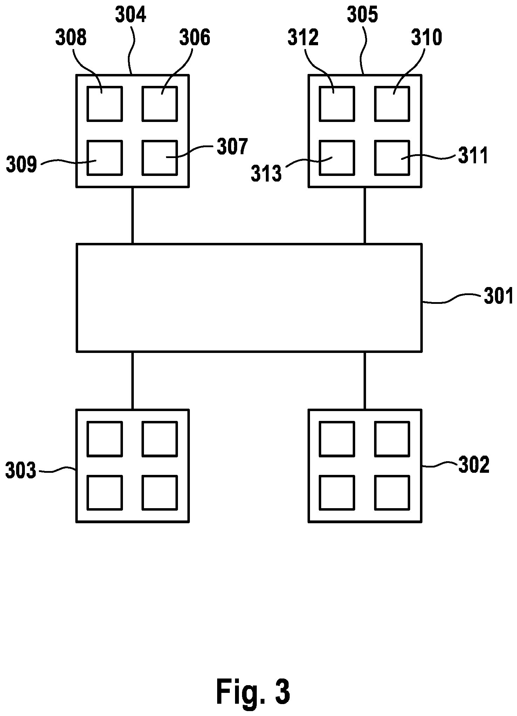

Fig. 3 zeigt eine beispielhafte Ausführungsform des erfindungsgemäßen Systems. Fahrzeugsicherheitskontrolleinrichtung 301 ist verbunden mit Lenkeingriffsmitteln 302 und Bremseneingriffsmitteln 303. Über die Verbindungen kann Fahrzeugsicherheitskontrolleinrichtung 301 Lenk- und/oder Bremseneingriffe durchführen. Weiterhin ist Fahrzeugsicherheitskontrolleinrichtung 301 mit Umfelderfassungsmittel 304 und Fahrzeug-zu-X-Kommunikationsmitteln 305 verbunden. Diese Verbindungen dienen der Übertragung von Umfeldsituationsdaten an Fahrzeugsicherheitskontrolleinrichtung 301. Die Umfelderfassungsmittel 304 umfassen in diesem Ausführungsbeispiel Lidarsensor 306, Kamerasensor 307, Radarsensor 308 und Lasersensor 309. Die Fahrzeug-zu-X-Kommunikationsmitteln 305 umfassen WLAN-Kommunikationsmittel 310, ISM-Kommunikationsmittel 311, Infarot-Kommunikationsmittel 312 und Mobilfunk-Kommunikationsmittel 313.

## Patentansprüche

1. Verfahren zur Verringerung einer Reaktionstotzeit einer Fahrzeugsicherheitskontrolleinrichtung, welche aufgrund einer eine Kollisionsgefahr aufweisenden Umfeldsituation Eingriffe in die Fahrzeugsteuerung durchführt,
wobei die Fahrzeugsicherheitskontrolleinrichtung einen ersten Eingriff in die Fahrzeugsteuerung durchführt, bevor die die Kollisionsgefahr aufweisende Umfeldsituation validiert ist, **dadurch gekennzeichnet,**
**dass** der erste Eingriff in die Fahrzeugsteuerung nur durchgeführt wird, wenn die zeit bis zur Validierung der Umfeldsituation und/oder bis zum Durchführen eines zweiten Eingriffs nicht ausreichend ist, um einen bevorstehenden Unfall zu vermeiden.

2. Verfahren nach Anspruch 1,
**dadurch gekennzeichnet,**
**dass** die Fahrzeugsteuerung die Bremseinrichtung und/oder Lenkeinrichtung eines Fahrzeugs umfasst.

3. Verfahren nach mindestens einem der Ansprüche 1 oder 2, **dadurch gekennzeichnet,**
**dass** der erste Eingriff in die Fahrzeugsteuerung beendet wird, wenn die die Kollisionsgefahr aufweisende Umfeldsituation nicht validiert werden kann.

4. Verfahren nach mindestens einem der Ansprüche 1 bis 3, **dadurch gekennzeichnet,**
**dass** der erste Eingriff in die Fahrzeugsteuerung ein geringfügiger Bremseneingriff und/oder ein geringfügiger Lenkeingriff ist, welche/r alleine nicht ausreichend ist/sind, einen bevorstehenden Unfall zu verhindern.

5. Verfahren nach mindestens einem der Ansprüche 1 bis 4, **dadurch gekennzeichnet,**
**dass** die Fahrzeugsicherheitskontrolleinrichtung zusätzlich zum ersten Eingriff in die Fahrzeugsteuerung eine Warnung an den Fahrer ausgibt.

6. Verfahren nach mindestens einem der Ansprüche 1 bis 5, **dadurch gekennzeichnet,**
**dass** der zweite Eingriff in die Fahrzeugsteuerung durchgeführt wird, wenn die die Kollisionsgefahr aufweisende Umfeldsituation validiert wurde.

7. Verfahren nach mindestens einem der Ansprüche 1 bis 6, **dadurch gekennzeichnet,**
**dass** der Lenkeingriff ein Momentenaufschlag auf das Lenkmoment und/oder ein Winkelaufschlag auf den Lenkwinkel ist.

8. Verfahren nach mindestens einem der Ansprüche 1 bis 7, **dadurch gekennzeichnet,**
**dass** dem Fahrer angezeigt wird, ob ein erster Eingriff durchgeführt wurde.

9. Verfahren nach mindestens einem der Ansprüche 1 bis 8, **dadurch gekennzeichnet,**
**dass** die Umfeldsituation mittels Fahrzeug-zu-X-Kommunikationsmitteln und/oder Umfelderfassungsmitteln erfasst wird.

10. Verfahren nach Anspruch 9,
**dadurch gekennzeichnet,**
**dass** die Umfelderfassungsmittel die Umfeldsituation auf Basis von Radar und/oder Kamera und/oder Lidar und/oder Laser erfassen.

11. Verfahren nach Anspruch 9,
**dadurch gekennzeichnet,**
**dass** die Fahrzeug-zu-X-Kommunikationsmittel auf Basis mindestens einer der folgenden Verbindungsarten kommunizieren:
- WLAN-Verbindung,
- ISM-Verbindung (Industrial, Scientific, Medical Band),
- Infrarotverbindung und
- Mobilfunkverbindung.

12. Verfahren nach mindestens einem der Ansprüche 1 bis 11,
**dadurch gekennzeichnet,**
**dass** die Validierung der die Kollisionsgefahr aufweisenden Umfeldsituation über ein weiteres Umfelderfassungsmittel oder ein weiteres Fahrzeug-zu-X-Kommunikationsmittel durchgeführt wird.

13. Verfahren nach mindestens einem der Ansprüche 1 bis 12,
**dadurch gekennzeichnet,**
**dass** die Validierung der die Kollisionsgefahr aufweisenden Umfeldsituation über das die Kollisionsgefahr aufweisende Umfeldsituation zuerst erfassende Umfelderfassungsmittel durchgeführt wird, indem das Umfelderfassungsmittel die die Kollisionsgefahr aufweisende Umfeldsituation über einen zur Validierung ausreichend langen Zeitraum erfasst.

14. System zur Verringerung einer Reaktionstotzeit einer Fahrzeugsicherheitskontrolleinrichtung, in welchem ein Verfahren gemäß mindestens einem der Ansprüche 1 bis 13 durchgeführt wird, umfassend
- Bremseneingriffsmittel,
- Lenkeingriffsmittel,
- Umfelderfassungsmittel,
- Fahrzeug-zu-X-Kommunikationsmittel und
- eine Fahrzeugsicherheitskontrolleinrichtung,
wobei die Fahrzeugsicherheitskontrolleinrichtung einen ersten Eingriff in die Fahrzeugsteuerung durchführt, bevor eine eine Kollisionsgefahr aufweisende Umfeldsituation validiert ist, **dadurch gekennzeichnet,**
**dass** der erste Eingriff in die Fahrzeugsteuerung nur durchgeführt wird, wenn die Zeit bis zur Validierung der Umfeldsituation und/oder bis zum Durchführen eines zweiten Eingriffs nicht ausreichend ist, um einen bevorstehenden Unfall zu vermeiden.

## Claims

1. A method for reducing a reaction delay time of a vehicle safety control device that performs interventions in the vehicle control system due to a danger-of-collision situation in the surroundings,
wherein the vehicle safety control device performs a first intervention in the vehicle control system before the danger-of-collision situation in the surroundings is validated, **characterised in**
**that** the first intervention in the vehicle control system will be performed only if the time until the validation of the situation in the surroundings and/or until the performance of a second intervention is not sufficient to avoid an imminent accident.

2. The method according to claim 1,
**characterised in**
**that** the vehicle control system comprises the braking device and/or the steering device of a vehicle.

3. The method according to at least one of claims 1 or 2,
**characterised in**
**that** the first intervention in the vehicle control system will be terminated if the danger-of-collision situation in the surroundings cannot be validated.

4. The method according to at least one of claims 1 to 3,
**characterised in**
**that** the first intervention in the vehicle control system is a slight braking intervention and/or a slight steering intervention that on their/its own are/is not sufficient to prevent an imminent accident.

5. The method according to at least one of claims 1 to 4,
**characterised in**
**that** the vehicle safety control device outputs a warning to the driver in addition to the first intervention in the vehicle control system.

6. The method according to at least one of claims 1 to 5,
**characterised in**
**that** the second intervention in the vehicle control system is performed when the danger-of-collision situation in the surroundings was validated.

7. The method according to at least one of claims 1 to 6,
**characterised in**
**that** the steering intervention consists in increasing the steering moment and/or increasing the steering angle.

8. The method according to at least one of claims 1 to 7,
**characterised in**
**that** the driver is informed as to whether a first intervention was performed.

9. The method according to at least one of claims 1 to 8,
**characterised in**
**that** the situation in the surroundings is detected by vehicle-to-X communication means and/or means for covering the surroundings.

10. The method according to claim 9,
**characterised in**
**that** the means for covering the surroundings detect the situation in the surroundings on the basis of radar and/or a camera and/or lidar and/or laser.

11. The method according to claim 9,
**characterised in**
**that** the vehicle-to-X communication means communicate on the basis of at least one of the following connection types:
- WLAN connection,
- ISM (Industrial, Scientific, Medical Band) connection,
- infrared connection, and
- mobile communication connection.

12. The method according to at least one of claims 1 to 11,
**characterised in**
**that** the validation of the danger-of-collision situation in the surroundings is performed by a further means for covering the surroundings or a further vehicle-to-X communication means.

13. The method according to at least one of claims 1 to 12,
**characterised in**
**that** the validation of the danger-of-collision situation in the surroundings is performed by that means for covering the surroundings which detects the danger-of-collision situation in the surroundings first, said means for covering the surroundings detecting the danger-of-collision situation in the surroundings over a period of time that is sufficiently long for validation.

14. A system for reducing a reaction delay time of a vehicle safety control device in which a method according to at least one of claims 1 to 13 is performed, comprising
- means for braking intervention,
- means for steering intervention,
- means for covering the surroundings,
- vehicle-to-X communication means, and
- a vehicle safety control device,
wherein the vehicle safety control device performs a first intervention in the vehicle control system before a danger-of-collision situation in the surroundings is validated, **characterised in**
**that** the first intervention in the vehicle control system will be performed only if the time until the validation of the situation in the surroundings and/or until the performance of a second intervention is not sufficient to avoid an imminent accident.

## Revendications

1. Procédé pour la réduction d'un retard de réaction d'une installation de commande de sécurité de véhicule, laquelle effectue des interventions sur la commande de véhicule du fait d'une situation d'environnement présentant un risque de collision, l'installation de commande de sécurité de véhicule exécutant une première intervention sur la commande de véhicule avant que la situation d'environnement présentant un risque de collision soit validée, **caractérisé en ce que**
la première intervention sur la commande de véhicule est uniquement effectuée lorsque le temps jusqu'à la validation de la situation d'environnement et/ou jusqu'à ce que la deuxième intervention soit effectuée ne suffit pas à empêcher un accident imminent.

2. Procédé selon la revendication 1,
**caractérisé en ce que**
la commande de véhicule comprend le dispositif de freinage et/ou le dispositif de direction d'un véhicule.

3. Procédé selon au moins l'une des revendications 1 ou 2,
**caractérisé en ce que**
la première intervention sur la commande de véhicule est terminée lorsque la situation d'environnement présentant un risque de collision ne peut pas être validée.

4. Procédé selon au moins l'une des revendications 1 à 3,
**caractérisé en ce que**
la première intervention sur la commande de véhicule est une intervention de freinage mineure et/ou une intervention de direction mineure, laquelle/lesquelles n'est pas/ne sont pas suffisante(s) par elle(s)-même(s) pour empêcher un accident imminent.

5. Procédé selon au moins l'une des revendications 1 à 4,
**caractérisé en ce que**
l'installation de commande de sécurité de véhicule émet en outre une alerte à l'attention du conducteur, en plus de la première intervention sur la commande de véhicule.

6. Procédé selon au moins l'une des revendications 1 à 5,
**caractérisé en ce que**
la deuxième intervention sur la commande de véhicule est effectuée lorsque la situation d'environnement présentant un risque de collision a été validée.

7. Procédé selon au moins l'une des revendications 1 à 6,
**caractérisé en ce que**
l'intervention de direction est une augmentation de couple du couple de direction et/ou une augmentation d'angle de l'angle de direction.

8. Procédé selon au moins l'une des revendications 1 à 7,
**caractérisé en ce qu'**
une indication est donnée au conducteur si une première intervention a été effectuée.

9. Procédé selon au moins l'une des revendications 1 à 8,
**caractérisé en ce que**
la situation d'environnement est détectée par des moyens de communication de véhicule à X et/ou par des moyens de détection d'environnement.

10. Procédé selon la revendication 9,
**caractérisé en ce que**
les moyens de détection d'environnement détectent la situation d'environnement sur la base d'un radar et/ou d'une caméra et/ou d'un lidar et/ou d'un laser.

11. Procédé selon la revendication 9,
**caractérisé en ce que**
les moyens de communication de véhicule à X communiquent sur la base d'au moins un des modes de connexion suivants :
- connexion WLAN,
- connexion ISM (bandes industrielle, scientifique, médicale),
- connexion infrarouge et
- connexion par téléphonie mobile.

12. Procédé selon au moins l'une des revendications 1 à 11,
**caractérisé en ce que**
la validation de la situation d'environnement présentant un risque de collision est effectuée par un moyen supplémentaire de détection d'environnement ou par un moyen supplémentaire de communication de véhicule à X.

13. Procédé selon au moins l'une des revendications 1 à 12,
**caractérisé en ce que**
la validation de la situation d'environnement présentant un risque de collision est effectuée par des moyens de détection d'environnement détectant d'abord la situation d'environnement présentant un risque de collision, le moyen de détection d'environnement détectant la situation d'environnement présentant un risque de collision sur un intervalle de temps suffisamment long pour la validation.

14. Système pour la diminution d'un retard de réaction d'une installation de sécurité de véhicule, sur lequel un procédé est effectué selon au moins l'une des revendications 1 à 13, comprenant
- des moyens d'intervention de freinage,
- des moyens d'intervention de direction,
- des moyens de détection d'environnement,
- des moyens de communication de véhicule à X et
- une installation de commande de sécurité de véhicule,
l'installation de commande de sécurité de véhicule effectuant une première intervention sur la commande de véhicule avant que la situation d'environnement présentant un risque de collision soit validée, **caractérisé en ce que**
la première intervention sur la commande de véhicule est uniquement effectuée lorsque le temps jusqu'à la validation de la situation d'environnement et/ou jusqu'à ce que la deuxième intervention soit effectuée ne suffit pas à empêcher un accident imminent.
